# EUROPEAN PATENT SPECIFICATION

(11) **EP 0 389 045 B1**
(45) Date of publication and mention of the grant of the patent: **01.09.1993**
(21) Application number: 90200627.9
(22) Date of filing: 19.03.1990
(51) Int. Cl.: B01D 46/26

(54) **Filtering device for separating dust from aeriform fluid and in particular for separating textile dust**
Filtervorrichtung zum Abtrennen von Staub aus einem luftförmigen Fluid und insbesondere zum Abscheiden von Textilstaub
Dispositif de filtration pour séparer de la poussière d'un fluide aériforme et particulièrement pour séparer de la poussière textile

(30) Priority: 22.03.1989 IT 1986389
(43) Date of publication of application: 26.09.1990
(73) Proprietor: AIRTEC DI GRIECO ANNAMARIA, I-20050 Triuggio (MI) (IT)
(72) Inventor: Francesconi, Giorgio, I-20031 Cesano Maderno, MI (IT)
(74) Representative: Arena, Giovanni

(56) References cited:
- EP-A- 0 011 995
- DE-A- 1 939 359
- US-A- 4 253 855
- US-A- 4 830 642

## Description

This invention refers to a filtering device for separating dust from aeriform fluid, which is particularly indicated for separating textile dust.

In a number of industrial sectors, the problem of ridding the air of dust produced during the course of production or manufacturing processes is of the utmost importance. This is particularly true in the case of the textile sector.

There are various known systems for ridding the air of textile dust, wherein the dust-laden air, if necessary prefiltered to remove the coarser dust (flocks, fibres, etc.), is made to pass through a stationary filter medium disposed along the lateral surface of a cylindrical chamber (see, for example, EP-A-0 044 106), or through filter media disposed on a series of flat panels. To prevent clogging caused by the formation of a layer of dust on the filter medium (usually consisting of a sheet of textile material or of a sheet of polyurethane foam), use is generally made of suction systems provided with suction nozzles which are made to slide, by means of more or less complicated control devices, along the entire surface of the filter medium, or media, covered with the layer of dust.

These air cleaning systems, however, have a number of drawbacks, including:
- considerable overall dimensions;
- complexity and considerable cost of the device which moves the suction nozzles along the filter medium/media;
- wear and sometimes rupture of the filter medium due to the suction nozzles rubbing on the latter;
- considerable consumption of energy for moving the suction nozzles and for suction and removal of the dust from the filter medium;
- the need for frequent maintenance of the device itself, due also to the fact that it operates on the side of the filter in which the dust-laden air flows.

This invention intends to provide a filtering device which is highly reliable and efficient and, due to its compact structure, simplicity and low cost, capable of overcoming the aforesaid problems.

According to the general feature of the invention, said device comprises the features as set forth in independent Claim 1.

Further features are shown in the dependent claims.

The innovatory features of the invention will be more clearly evident from the following description of a non-restrictive embodiment, with reference to the accompanying drawings, in which:
Fig.1: shows a perspective view of a textile dust thickening and separating machine making use of a filtering device according to the invention;
Fig.2: shows a front view of the machine of Fig. 1;
Fig.3: shows a lateral cross-sectional view of the same machine;
Fig.4: shows a top cross-sectional view (along the line Y-Y of Fig. 3) of the same machine;
Fig.5: shows a cross-sectional view of the blowing and suction nozzles, and a portion of the filter medium;
Fig.6: shows a left hand side view of the nozzles of Fig. 5.

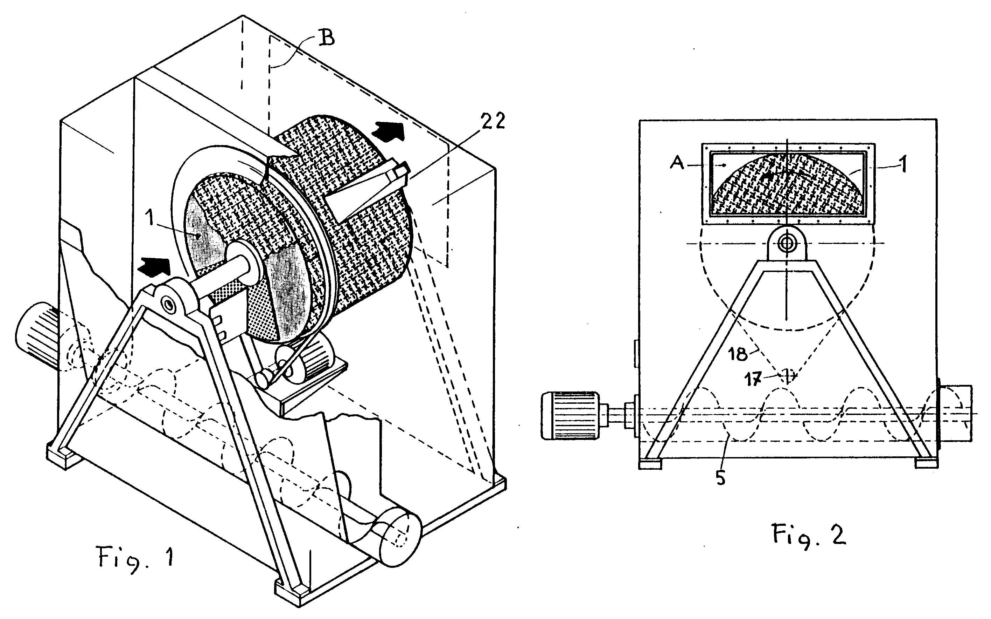

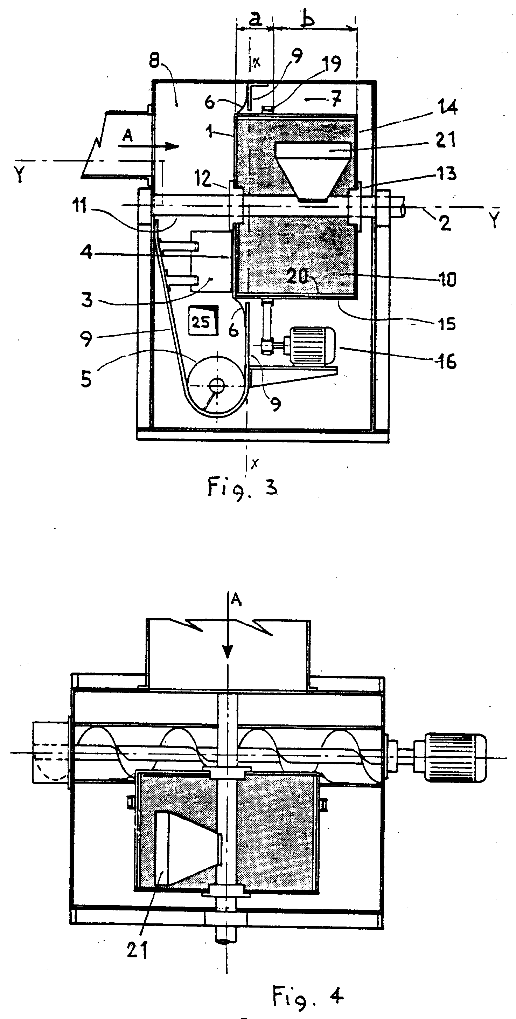

Figs.1, 2, 3 and 4 show a filtering device according to the invention, applied to a dust separating machine provided with a stage for prefiltering the coarser dust (flocks, fibres, etc.) of the type described for example in IT-A-21375 /87. Said prefiltering stage consists of the portion shown in Fig. 3 to the left of the line X-X, and operates as follows.

The dust-laden air enters, through the inlet A, into a first chamber 8 where it is ridded of the coarser dust by passing through the filter medium 1 consisting of a disk-shaped wire net rotating around the axis 2. As the disk rotates, the blade 3 with its edge 4 disposed close to the surface of the disk, removes the dust which accumulates on the disk, thus preventing clogging of the relative filter medium. The removed dust falls onto the screw 5 which compresses it and conveys it to the outside. The dust-laden air is prevented from entering the chamber 7 both by the walls 9 separating the chamber 7 from the chamber 8, and by the felt packing 6 which rests along the entire outer edge of the disk 1.

In the fine dust separating chamber 7, reference 10 indicates a cylindrical drum rotating on the hollow shaft 11 by means of the bearings 12 and 13 on which it rests. Said drum has a base 1 consisting of the aforesaid coarse dust filter medium, a base 14 consisting of a solid metal disk and a cylindrical shell consisting, along the portion "a", of solid sheet and along the portion "b" of a metal framework or wide-mesh wire net 15 on which the fine dust filter medium 20 is secured.

The drum 10 can be made to rotate by the motor 16 by means of the pulley 17, the belt 18 and the pulley 19 secured to the portion "a" of the cylindrical shell.

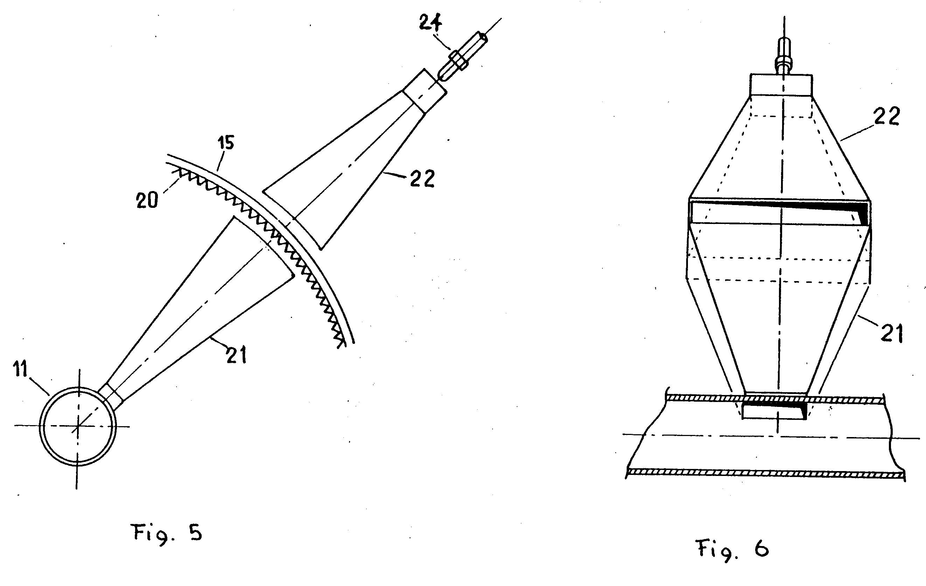

Fig. 5 shows a cross-sectional portion of the net 15 and the filter medium 20. Said filter medium consists of a very fine-mesh stainless steel wire cloth (with diameter of the wires and width of each mesh in the region of a few dozen µm). Said cloth is very advantageously pleated, with pleats parallel to the axis of the drum.

References 21 and 22 indicate a suction and a blowing nozzle respectively. These nozzles are also shown in Fig. 6, which represents a side view of the parts illustrated in Fig. 5, and in which for the sake of simplicity the filter medium 20 and the net 15 have been omitted. As can be seen in the latter figure, the suction nozzle is in communication with the internal cavity of the shaft 11.

The filtering device operates as follows. Between the inlet aperture A and the outlet aperture B of the machine, a pressure difference is maintained, by means of a suction device not shown in the figures, which ensures the flow of air to be cleaned through the machine. This flow includes the passage of the dust-laden air through the disk 1 where the aforesaid prefiltering to rid it of the coarser dust takes place. After passing through the disk 1, the air flows towards the cylindrical shell of the drum and out of the latter through the filter medium which rids it of the residual fine dust.

In order to prevent clogging of the filter medium 20 due to the layer of dust forming on the latter, the drum 10 is made to rotate (with a speed of rotation in the range of 3-5 r.p.m.). At the same time, compressed air is blown into the nozzle 22 by means of the ejector 24, of known type, which operates on the Venturi tube principle. This causes a jet of air to be blown onto the filter medium 20 in correspondence with the outlet of the nozzle. At the same time, air is drawn in through the cavity in the shaft 11 and the nozzle 21. The combined action of the pressure of the jet of air from 22 and the vacuum produced by 21 causes the layer of dust accumulated on 20, in correspondence with the interface between the two apertures, to become detached and conveyed through the nozzle 21, the shaft 11, an aspirator and a duct not shown in the figure, towards the outside of the machine and then re-introduced into the chamber 8 through the aperture 25 shown in Fig. 3.

In order to concentrate the jet of air from 22 onto the filter medium 20, a brush (not shown in the figures) with bristles long enough to ensure that their ends touch the net 15 can be disposed around the edge of the outlet of 22.

The rotation of the drum 10 and the sucking/blowing action of the nozzles 21 and 22 can either be continuous or intermittent. In this latter case, a pressure gauge (not shown in the figures) can be provided to measure the difference in pressure between the inside of the drum and the chamber 7, and set in such a way that when the difference in pressure exceeds a given maximum limit corresponding to the start of the clogging conditions, it causes both the rotation of the drum and the sucking//blowing action of the nozzles 21 and 22.

The jet of air coming from the ejector 24 can very advantageously be of the pulsing type, so as to detach the layer of dust from 20 more easily and more efficiently.

The previously mentioned advantages of the invention will be clearly evident from the foregoing description. With regard to smaller overall dimensions, the relative values can be decreased by as much as 90%.

With regard to economy and efficiency, it should be pointed out that the invention ensures a lower consumption of energy, a practically unlimited life of the filter due to the absence of wear, and more efficient cleaning, with special reference to the particular choice of the type of filter medium.

The filter medium 20 can be made of phosphor bronze wire cloth, paper, fibreglass or textile fibres, instead of steel wire cloth.

The prefiltering could be carried out in a different way, or even not at all (whenever the dust in the air is very fine and mixed with very short fibres). In this case, in the embodiment referred to in the figures, the filter medium 1 could be omitted.

## Claims

1. Filtering device for ridding a flow of aeriform fluid, and in particular of air, of dust contained in it, comprising a drum (10) provided with a filter medium (20) along its cylindrical surface and revolvable around its own axis (2), one or more stationary blowing nozzle (22) disposed on the side of the surface of the filter medium from which the filtered air flows, one or more stationary sucking nozzles (21) for sucking in the dust deposited on the surface of the filter medium, disposed on the side of the surface of the filter medium which receives the flow of dust-laden air, in a position opposite that of the aforesaid blowing nozzle,
characterized by the fact that:
- the flow of dust-laden air impinges onto the side of the surface of the filter medium (20) which is inside the drum;
- the filter medium (20) consists of a pleated cloth;
- a preset pressure control device is provided which, depending on the filtering conditions, continuously or periodically activates the rotation of the drum and the blowing action of said stationary blowing nozzles.

2. Filtering device as claimed in Claim 1, characterized by the fact that a prefiltering medium (1) consisting of a disk-shaped wire net coaxial with and of the same diameter of the drum and revolvable together with the same is provided, in which the dust-laden air passes before entering into the drum.

3. Filtering device as claimed in Claim 1, characterized by the fact that:
- said pleated cloth is a stainless steel wire cloth or a textile yarn cloth, with diameter of the wires or respectively of the yarns, and width of the meshes in the region of a few dozen µm;
- the pleats of the filter medium (20) are parallel to the axis of the drum.

4. Filtering device as claimed in Claim 1, characterized by the fact that disposed along the edge of the blowing nozzle is a brush whose bristles have ends which touch a wide-mesh wire net (15) to which said filter medium (20) is secured.

5. Filtering device as claimed in Claim 1, characterized by the fact that jets of air of the pulsing type are emitted from the blowing nozzle.

6. Filtering device as claimed in Claim 1, characterized by the fact that said preset pressure control device, depending on the filtering conditions, continuously or periodically activate the sucking action of said stationary sucking nozzles.

## Patentansprüche

1. Filtervorrichtung zum Befreien eines Stroms eines luftförmigen Fluids und insbesondere eines Luftstroms von darin enthaltenem Staub, bestehend aus einer Trommel (10), die entlang ihrer zylindrischen Oberfläche mit einem Filtermedium (20) versehen und um ihre eigene Achse (2) drehbar ist, einer oder mehreren stationären Blasdüsen (22), die auf derjenigen Seite der Oberfläche des Filtermediums angeordnet sind, von wo die gefilterte Luft wegströmt, einer oder mehreren stationären Saugdüsen (21) zum Absaugen des auf der Oberfläche des Filtermediums niedergeschlagenen Staubes und angeordnet auf der den staubhaltigen Luftstrom empfangenden Seite der Oberfläche des Filtermediums an einer Position, die derjenigen der oben genannte Blasdüse gegenüberliegt,
dadurch gekennzeichnet, daß
- der Strom staubhaltiger Luft auf diejenige Seite der Oberfläche des Filtermediums (20) auftrifft, die innerhalb der Trommel ist;
- das Filtermedium (20) aus einem gefältelten Gewebe besteht;
- eine auf vorgegebenen Druck arbeitende Regelungseinrichtung vorgesehen ist, die, abhängig von den Filterungsbedingungen, die Drehung der Trommel und die Blasfunktion der stationären Blasdüsen kontinuierlich oder periodisch aktiviert.

2. Filtervorrichtung nach Anspruch 1, dadurch gekennzeichnet, daß ein vorfilterndes Medium (1) vorgesehen ist, bestehend aus einem scheibenförmigen, mit der Trommel koaxialen und denselben Durchmesser wie diese aufweisenden und zusammen mit dieser drehbaren Drahtnetz, durch welches die staubhaltige Luft dringt, bevor sie in die Trommel eintritt.

3. Filtervorrichtung nach Anspruch 1, dadurch gekennzeichnet, daß
- das gefältelte Gewebe ein Gewebe aus rostfreiem Stahldraht oder ein Gewebe aus Textilgarn ist, wobei der Durchmesser der Drähte oder des Garns und die Breite der Maschen im Bereich von wenigen Dutzend µm liegt;
- die Falten des Filtermediums (20) parallel zur Achse der Trommel laufen.

4. Filtervorrichtung nach Anspruch 1, dadurch gekennzeichnet, daß entlang dem Rand der Blasdüse eine Bürste vorgesehen ist, deren Borsten mit ihren Enden ein großmaschiges Drahtnetz (15) berühren, an welchem das Filtermedium (20) befestigt ist.

5. Filtervorrichtung nach Anspruch 1, dadurch gekennzeichnet, daß von der Blasdüse pulsierende Luftstrahlen ausgesandt werden.

6. Filtervorrichtung nach Anspruch 1, dadurch gekennzeichnet, daß die auf voreingestellten Druck arbeitende Regelungseinrichtung abhängig von den Filterungsbedingungen die Saugfunktion der stationären Saugdüsen kontinuierlich oder periodisch aktiviert.

## Revendications

1. Dispositif de filtrage pour débarrasser un flux de fluide aériforme, et en particulier d'air, de poussière qu'il contient, comprenant un tambour (10) muni d'un milieu de filtrage (20) selon sa surface cylindrique et tournant autour de son propre axe (2), une ou plusieurs buses de soufflage fixes (22) disposées du côté de la surface du milieu de filtrage à partir de laquelle l'air filtré s'écoule, une ou plusieurs buses d'aspiration fixe (21) pour aspirer la poussière déposée sur la surface du milieu de filtrage, disposées du côté de la surface du milieu de filtrage qui reçoit le flux d'air chargé de poussière, à une position opposée à celle de la buse de soufflage susmentionnée,
caractérisé en ce que :
- le flux d'air chargé de poussière arrive du côté de la surface du milieu de filtrage (20) interne au tambour ;
- le milieu de filtrage (20) consiste en un tissu plissé ;
- un dispositif de commande de pression préréglé est prévu et, selon les conditions de filtrage, actionne en continu ou périodiquement la rotation du tambour et l'action de soufflage des buses de soufflage fixes.

2. Dispositif de filtrage selon la revendication 1, caractérisé en ce qu'un milieu de préfiltrage (1) consistant en un filet en forme de disque coaxial au tambour, de même diamètre que celui-ci et pouvant tourner avec celui-ci, est prévu, dans lequel l'air chargé de poussière passe avant d'entrer dans le tambour.

3. Dispositif de filtrage selon la revendication 1, caractérisé en ce que :
- le tissu plissé est un tissu de fil en acier inoxydable ou un tissu de fibres textiles, le diamètre dés fils ou respectivement dés fibres et la dimension des mailles étant dans la plage de quelques douzaines de micromètres ;
- les plis du milieu de filtrage (20) sont parallèles à l'axe du tambour.

4. Dispositif de filtrage selon la revendication 1, caractérisé en ce que, le long du bord de la buse de soufflage est disposée une brosse dont les poils ont des extrémités qui touchent un filet à large maille (15) auquel le milieu de filtrage (20) est fixé.

5. Dispositif de filtrage selon la revendication 1, caractérisé en ce que des jets d'air de type pulsé sont émis à partir de la buse de soufflage.

6. Dispositif de filtrage selon la revendication 1, caractérisé en ce que le dispositif de commande de pression préréglé, selon les conditions de filtrage, actionne en continu ou périodiquement l'action d'aspiration des buses d'aspiration fixe.
